# EUROPEAN PATENT APPLICATION

(11) **EP 4 773 684 A1**
(43) Date of publication of application: **08.07.2026**
(21) Application number: 24887413.3
(22) Date of filing: 25.06.2024
(51) Int. Cl.: H04W 52/02

(54) **SIGNAL SENDING METHOD, INFORMATION DETERMINATION METHOD, COMMUNICATION NODE, AND STORAGE MEDIUM**

(30) Priority: 08.11.2023 CN 202311486754
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); GUO, Qiujin, Shenzhen, Guangdong 518057 (CN); HU, Youjun, Shenzhen, Guangdong 518057 (CN); CHEN, Mengzhu, Shenzhen, Guangdong 518057 (CN)
(74) Representative: Aipex B.V.
(86) International application number: PCT/CN2024/101137
(87) International publication number: WO 2025/097789

(57) **Abstract**

Provided are a signal sending method, an information determination method, a communication node, and a storage medium. The signal sending method includes determining at least one of a target sequence or target data according to target information; and sending an indication signal, where the indication signal is generated according to the at least one of the target sequence or the target data.

## Description

### TECHNICAL FIELD

The present application relates to the field of wireless communication technology, for example, a signal sending method, an information determination method, a communication node, and a storage medium.

### BACKGROUND

To satisfy battery life requirements, a user equipment (UE) may use a separate receiver module to receive a low-power wake-up signal and activate, through the wake-up signal, a main receiver to perform data transmission. When the UE detects no low-power wake-up signal, the main receiver is in a deep sleep state, thereby reducing power consumption of the terminal. During a low-power wake-up process, there is currently no effective mechanism for transmitting related signals.

### SUMMARY

The present application provides a signal sending method, an information determination method, a communication node, and a storage medium.

The present application provides a signal sending method. The signal sending method includes determining at least one of a target sequence or target data according to target information; and sending an indication signal, where the indication signal is generated according to the at least one of the target sequence or the target data.

The present application also provides an information determination method. The information determination method includes receiving an indication signal; determining at least one of a target sequence or target data according to the indication signal; and determining target information according to the at least one of the target sequence or the target data.

Embodiments of the present application also provide a communication node. The communication node includes a memory, a processor, and a computer program stored in the memory and executable on the processor. When executing the program, the processor performs the signal sending method or the information determination method.

Embodiments of the present application also provide a computer-readable storage medium storing a computer program which, when executed by a processor, causes the processor to perform the signal sending method or the information determination method.

### BRIEF DESCRIPTION OF DRAWINGS

FIG. 1 is a flowchart of a signal sending method according to an embodiment.
FIG. 2 is a flowchart of an information determination method according to an embodiment.
FIG. 3 is a diagram illustrating that a first sequence is carried on an OOK symbol according to an embodiment.
FIG. 4 is a diagram illustrating that a wake-up signal is sent according to an embodiment.
FIG. 5 is a diagram illustrating that first data is sent according to an embodiment.
FIG. 6 is a diagram illustrating that first data is sent after a first signal according to an embodiment.
FIG. 7 is a diagram illustrating that first data is sent after a first signal according to an embodiment.
FIG. 8 is a diagram illustrating the structure of a signal sending apparatus according to an embodiment.
FIG. 9 is a diagram illustrating the structure of an information determination apparatus according to an embodiment.
FIG. 10 is a diagram illustrating a hardware structure of a communication node according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

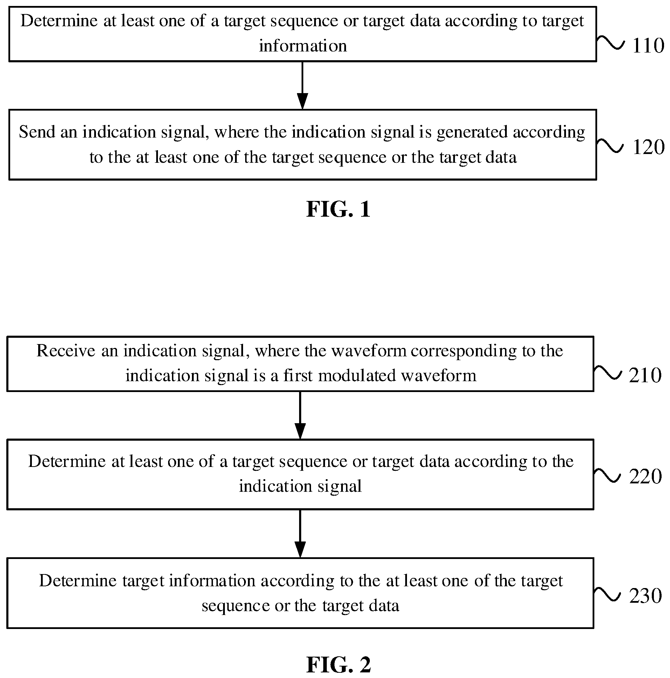

FIG. 1 is a flowchart of a signal sending method according to an embodiment. The signal sending method may be applied to a first communication node. The first communication node may be a network node (such as a base station or an access point). As shown in FIG. 1, the method of this embodiment includes step 110 and step 120.

In step 110, at least one of a target sequence or target data is determined according to target information.

In step 120, an indication signal is sent, where the indication signal is generated according to the at least one of the target sequence or the target data.

In this embodiment, the target information mainly refers to information indicating that a second communication node (a user node, such as a UE) can be woken up or can perform data transmission. The target information includes, for example, at least one of the following: a full wake-up signal, a system information change indication, a wake-up monitoring stop indication, public warning system information, a wake-up monitoring deactivation indication, or an indication signal monitoring deactivation indication. In a low-power wake-up scenario, the indication signal may be sent through a first modulated waveform. The first modulated waveform may be binary on-off keying (OOK) combined with orthogonal frequency-division multiplexing (OFDM). That is, an OFDM sequence is carried on the OOK symbol. There are two manners in which the first modulation carries data: One is a sequence-based manner, and the other is a data-based manner. In this embodiment, it is possible to determine a corresponding target sequence and/or target data according to the target information, and the indication signal carries the target information through the target sequence and/or the target data. Based on this, the target information is sent.

In an embodiment, the target information includes at least one of the following: a full wake-up signal, a system information change indication, a wake-up monitoring stop indication, public warning system information (Earthquake and Tsunami Warning System/Commercial Mobile Alert Service (ETWS/CMAS)), a wake-up monitoring deactivation indication, or an indication signal monitoring deactivation indication.

In an embodiment, the target sequence includes at least one of the following: a Zadoff-Chu (ZC) sequence, a pseudo-noise (PN) sequence, or an orthogonal sequence.

In an embodiment, the target sequence includes at least one subsequence from at least one configured subsequence, or the target sequence is obtained from first coding on at least one configured subsequence. The at least one configured subsequence includes at least one of a PN sequence, a preset sequence, or an orthogonal sequence. The first coding includes at least one of the following: Manchester coding, bi-phase space coding, polar coding, Reed-Muller coding, turbo coding, or tail biting convolutional coding.

In an embodiment, the target sequence includes a first sequence, the indication signal includes a first signal, and the first sequence is carried on a modulation symbol corresponding to the first signal.

In an embodiment, the target sequence includes a first sequence, the indication signal includes a wake-up signal, and the first sequence is carried on a preamble included in the wake-up signal.

In an embodiment, the target sequence includes a second sequence, the indication signal includes a first signal, and the waveform corresponding to the first signal is a first modulated waveform based on the second sequence.

In an embodiment, the target sequence includes a first sequence and a second sequence, the indication signal includes a first signal, the waveform corresponding to the first signal is a first modulated waveform based on the second sequence, and the first sequence is carried on a modulation symbol corresponding to the first signal. In an embodiment, the method also includes in response to the first sequence including a ZC sequence, determining a root index of the ZC sequence according to at least one of a cell identifier, a time-domain position at which the first signal is sent, a frequency-domain position at which the first signal is sent, or the target information; in response to the first sequence or a second sequence including a PN sequence, determining an initial value of the PN sequence according to at least one of the cell identifier, the time-domain position at which the first signal is sent, the frequency-domain position at which the first signal is sent, or the target information; and in response to the first sequence or the second sequence including the PN sequence, an orthogonal sequence, or a preset sequence, selecting the PN sequence, the orthogonal sequence, or the preset sequence from a predefined PN sequence set, a predefined orthogonal sequence set, or a preset sequence set according to at least one of the cell identifier, the time-domain position at which the first signal is sent, the frequency-domain position at which the first signal is sent, or the target information.

In an embodiment, the target data includes first data, the indication signal includes the first data, and the waveform corresponding to the first data is a first modulated waveform based on the first data.

A time-domain position at which the first signal is sent is determined according to at least one of the following: at least one of a signaling-configured period or a signaling-configured offset; a first offset; a start position of a discontinuous reception (DRX) cycle; or a start position of an extended idle mode discontinuous reception (eDRX) cycle.

A frequency-domain position at which the first signal is sent is determined according to at least one of the following: a frequency-domain position of a target signal, a frequency-domain position of a wake-up signal, a second offset, or a frequency-domain position of a physical downlink control channel.

In an embodiment, the target sequence includes a first sequence, the target data includes first data, the indication signal includes the first data, the waveform corresponding to the first data is a first modulated waveform based on the first data, and the first sequence is carried on a modulation symbol corresponding to the first data.

In an embodiment, the target data includes first data, the indication signal includes a first signal, the first data is sent after the first signal, and the waveform corresponding to the first data is a first modulated waveform based on the first data.

In an embodiment, the indication signal includes a first signal, and the first signal is a low-power synchronization signal.

FIG. 2 is a flowchart of an information determination method according to an embodiment. The information determination method may be applied to a second communication node. As shown in FIG. 2, the method of this embodiment includes step 210 to 230.

In step 210, an indication signal is received.

In step 220, at least one of a target sequence or target data is determined according to the indication signal.

In step 230, target information is determined according to the at least one of the target sequence or the target data.

In this embodiment, the indication signal carries the target information through the target sequence and/or the target data. The second communication node can determine the target information according to the indication signal to determine whether to be woken up or whether to perform data transmission.

In an embodiment, the target information includes at least one of the following: a full wake-up signal, a system information change indication, a wake-up monitoring stop indication, public warning system information, a wake-up monitoring deactivation indication, or a target signal monitoring deactivation indication.

In an embodiment, the indication signal includes a first signal, and the target sequence includes a first sequence.

Determining the target information according to the at least one of the target sequence or the target data includes determining the target information according to the first sequence carried on a modulation symbol corresponding to the first signal.

In an embodiment, the indication signal includes a first signal, the waveform corresponding to the first signal is a first modulated waveform based on a second sequence, and the target sequence includes a first sequence and the second sequence.

Determining the target information according to the at least one of the target sequence or the target data includes determining the target information according to the first sequence carried on a modulation symbol corresponding to the first signal and the second sequence corresponding to the first signal.

In an embodiment, the indication signal includes a wake-up signal, and the target sequence includes a first sequence.

Determining the target information according to the at least one of the target sequence or the target data includes determining the target information according to the first sequence carried on a preamble included in the wake-up signal.

In an embodiment, the indication signal includes a first signal, the waveform corresponding to the first signal is a first modulated waveform based on a second sequence, and the target sequence includes the second sequence.

Determining the target information according to the at least one of the target sequence or the target data includes determining the target information according to the second sequence corresponding to the first signal.

In an embodiment, the indication signal includes first data, and the target data includes the first data.

Determining the target information according to the at least one of the target sequence or the target data includes determining the target information according to the first data.

In an embodiment, the indication signal includes a first signal, first data is sent after the first signal, and the target data includes the first data.

Determining the target information according to the at least one of the target sequence or the target data includes determining the target information according to the first data sent after the first signal.

In an embodiment, the indication signal includes first data, the waveform corresponding to the first data is a first modulated waveform based on the first data, a first sequence is carried on a modulation symbol corresponding to the first data, the target data includes the first data, and the target sequence includes the first sequence.

Determining the target information according to the at least one of the target sequence or the target data includes determining the target information according to the first data and the first sequence carried on the modulation symbol corresponding to the first data.

The following describes the signal sending method and the information determination method of the present application through embodiments. In the following embodiments, by way of example, the first communication node is a base station, and the second communication node is a terminal.

### Embodiment one

The base station determines a first sequence according to target information.

The base station sends an indication signal. The indication signal includes a first signal. The waveform corresponding to the first signal is a first modulation based on a second sequence. The first modulation is OOK modulation. The first sequence is carried on the OOK symbol.

In an embodiment, the target information includes at least one of the following: a full wake-up signal, a system information change indication, a wake-up monitoring stop indication, public warning system information (Earthquake and Tsunami Warning System/Commercial Mobile Alert Service (ETWS/CMAS)), a wake-up monitoring deactivation indication, or an indication signal monitoring deactivation indication.

In an embodiment, the first sequence includes at least one of the following: a Zadoff-Chu (ZC) sequence, a pseudo-noise (PN) sequence, or an orthogonal sequence.

In an embodiment, the second sequence includes at least one subsequence from at least one configured subsequence, or the target sequence is obtained from first coding on at least one configured subsequence.

The at least one configured subsequence includes at least one of a PN sequence, a preset sequence (for example, a sequence obtained from calculation and search), or an orthogonal sequence.

In an embodiment, the first coding includes at least one of the following: Manchester coding, bi-phase space coding (also referred to as FM0 coding), polar coding, Reed-Muller (RM) coding, turbo coding, or tail biting convolutional coding (TBCC).

In an embodiment, it is assumed that determining the first sequence according to the target information by the base station includes the following: When the base station sends the full wake-up signal/the system information change indication/the wake-up monitoring stop indication/the ETWS/the CMAS/the wake-up monitoring deactivation indication/the indication signal monitoring deactivation indication, the corresponding first sequence is sequence A1; and when the base station is not required to send the target information, the corresponding first sequence is sequence A. It is assumed that the second sequence is [0 1 1 0]. It is further assumed that the first signal is a low-power synchronization signal (LP-SS), with a corresponding transmission period T and an offset of 0.

When the base station is required to send the full wake-up signal, the base station determines that the first sequence is sequence A1.

When the base station sends the LP-SS, the corresponding waveform is OOK modulation based on the second sequence, that is, the second sequence is sent through the OOK modulation, where sequence A1 corresponding to the first sequence is carried on the OOK symbol.

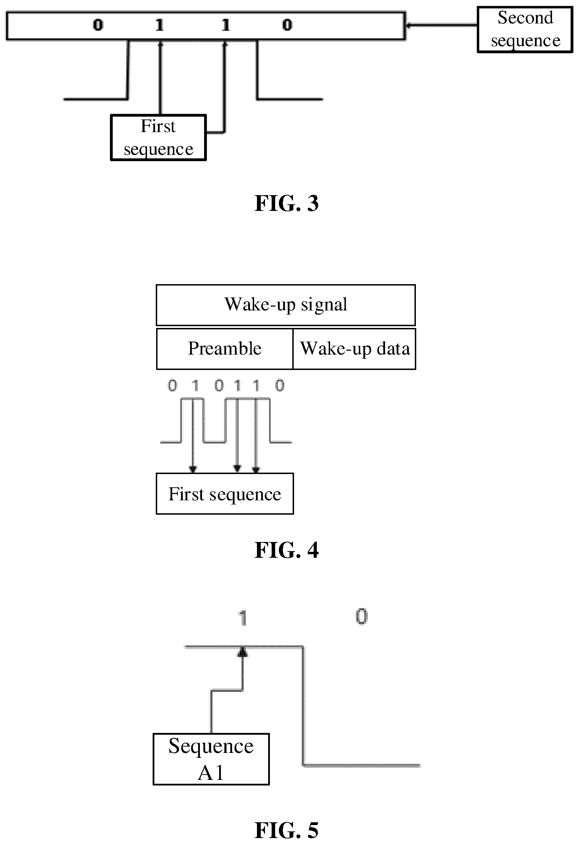

FIG. 3 is a diagram illustrating that a first sequence is carried on an OOK symbol according to an embodiment. As shown in FIG. 3, that a sequence is carried on the OOK symbol means that the sequence is carried on a first position in the OOK symbol. The first position is a high voltage level position, or a position for data transmission, or a position corresponding to transmission of "1". In this application, it is assumed that the first position is an OOK symbol corresponding to transmission of "1", and therefore an example in which the first sequence is carried on the " 1 " symbol is used for illustration.

In an embodiment, when the UE detects the LP-SS and obtains, by decoding, that the sequence carried on the OOK symbol is sequence A1, the UE enables the host/the main receiving module to receive and send data.

In an embodiment, it is assumed that determining the first sequence according to the target information by the base station includes the following: When the base station sends the system information change indication, the corresponding first sequence is sequence A1; when the base station sends the wake-up monitoring stop indication/the wake-up monitoring deactivation indication/the indication signal monitoring deactivation indication, the corresponding first sequence is sequence A2; when the base station sends the ETWS/the CMAS, the corresponding first sequence is sequence A3; and when the base station is not required to send the target information, the corresponding first sequence is sequence A. It is assumed that the second sequence is [0 1 1 0]. It is further assumed that the first signal is an LP-SS, with a corresponding transmission period T and an offset of 0.

When the base station is required to send the system information change indication, the base station determines that the first sequence is sequence A1.

When the base station sends the LP-SS, the corresponding waveform is OOK modulation based on the second sequence, where sequence A1 is carried on the OOK symbol.

The UE detects the LP-SS and obtains, by decoding, that the sequence carried on the OOK symbol is sequence A1, and then the UE enables the host/the main receiving module to receive system information.

**In** an embodiment, it is assumed that determining the first sequence according to the target information by the base station includes the following: When the base station sends the system information change indication, the corresponding first sequence is sequence A1; when the base station sends the wake-up monitoring stop indication/the wake-up monitoring deactivation indication/the indication signal monitoring deactivation indication, the corresponding first sequence is sequence A2; when the base station sends the ETWS/the CMAS, the corresponding first sequence is sequence A3; when the base station sends the full wake-up signal, the corresponding first sequence is sequence A4; and when the base station is not required to send the target information, the corresponding first sequence is sequence A. It is assumed that the second sequence is [0 1 1 0]. It is further assumed that the first signal is an LP-SS, with a corresponding transmission period T and an offset of 0.

When the base station is required to send the system information change indication, the base station determines that the first sequence is sequence A1.

When the base station sends the LP-SS, the corresponding waveform is OOK modulation based on the second sequence, where sequence A1 is carried on the OOK symbol.

The UE detects the LP-SS and obtains, by decoding, that the sequence carried on the OOK symbol is sequence A1, and then the UE enables the host/the main receiving module to receive system information.

In an embodiment, it is assumed that determining the first sequence according to the target information by the base station includes the following: When the base station sends the system information change indication, the corresponding first sequence is sequence A1; when the base station sends the wake-up monitoring stop indication/the wake-up monitoring deactivation indication/the indication signal monitoring deactivation indication, the corresponding first sequence is sequence A2; when the base station sends the ETWS/the CMAS, the corresponding first sequence is sequence A1; and when the base station sends the full wake-up signal, the corresponding sequence is sequence A4. It is assumed that the second sequence is [0 1 1 0]. It is further assumed that the first signal is an LP-SS, with a corresponding transmission period T and an offset of 0.

When the base station is required to send the ETWS/the CMAS, the base station determines that the first sequence is sequence A1.

When the base station sends the LP-SS, the corresponding waveform is OOK modulation based on the second sequence, where sequence A1 is carried on the OOK symbol.

The UE detects the LP-SS and obtains, by decoding, that the sequence carried on the OOK symbol is sequence A1, and then the UE enables the host/the main receiving module to receive related system information.

In an embodiment, when sequence A/A1/A2/A3/A4 includes a ZC sequence, a root index of the ZC sequence is determined according to at least one of a cell identity (ID), a time-domain position at which the LP-SS is sent, or a frequency-domain position at which the LP-SS is sent. The length of the ZC sequence is configured via signaling or fixed.

In an embodiment, when sequence A/A1/A2/A3/A4 includes a PN sequence, an initial value of the PN sequence is determined according to at least one of the cell identity (ID), the time-domain position at which the LP-SS is sent, or the frequency-domain position at which the LP-SS is sent. The length of the PN sequence is configured via signaling or fixed.

In an embodiment, when sequence A/A1/A2/A3/A4 includes a PN sequence/an orthogonal sequence, a PN sequence set/an orthogonal sequence set is predefined. Sequence A/A1/A2/A3/A4 is a sequence selected from the sequence set according to at least one of the cell ID, the time-domain position at which the LP-SS is sent, or the frequency-domain position at which the LP-SS is sent.

### Embodiment two

The base station determines a first sequence according to target information.

When the base station sends a wake-up signal, the first sequence is carried on a preamble included in the wake-up signal.

In an embodiment, the base station is required to send the target information and determines the first sequence according to the target information.

The base station sends the wake-up signal. The corresponding structure includes the preamble and wake-up data. FIG. 4 is a diagram illustrating that a wake-up signal is sent according to an embodiment. As shown in FIG. 4, it is assumed that the preamble is 010110, where the first sequence is carried on the preamble.

The UE detects the wake-up signal and obtains, by decoding, the first sequence carried on the preamble, and then the UE determines an operation of the host/the main receiving module according to a relationship between the first sequence and the target information.

### Embodiment three

The base station determines a second sequence according to target information.

The base station sends a first signal. The waveform corresponding to the first signal is OOK modulation based on a second sequence.

In an embodiment, it is assumed that determining the second sequence according to the target information by the base station includes the following: When the base station sends a full wake-up signal/a system information change indication/a wake-up monitoring stop indication/an ETWS/a CMAS/a wake-up monitoring deactivation indication/an indication signal monitoring deactivation indication, the corresponding second sequence is sequence B1; and when the base station does not send target information, the corresponding second sequence is sequence B. It is assumed that the first signal is an LP-SS, with a corresponding transmission period T and an offset of 0. It is assumed that sequence B is [10100100101110110001011100111000], and sequence B1 is [01011011010001001110100011000111].

When the base station is required to send the full wake-up signal, the base station determines that the second sequence is sequence B1.

When the base station sends the LP-SS, the corresponding waveform is OOK modulation based on sequence B1.

The UE detects the LP-SS and obtains, by decoding, that the sequence carried on the LP-SS is sequence B1, and then the UE enables the host/the main receiving module to receive and send data.

In an embodiment, it is assumed that determining the second sequence according to the target information by the base station includes the following: When the base station sends the system information change indication, the corresponding second sequence is sequence B1; when the base station sends the wake-up monitoring stop indication/the wake-up monitoring deactivation indication/the indication signal monitoring deactivation indication, the corresponding second sequence is sequence B2; when the base station sends the ETWS/the CMAS, the corresponding second sequence is sequence B3; and when the base station is not required to send the target information, the corresponding second sequence is sequence B. It is assumed that the first signal is an LP-SS, with a corresponding transmission period T and an offset of 0.

When the base station is required to send the system information change indication, the base station determines that the second sequence is sequence B1.

When the base station sends the LP-SS, the corresponding waveform is OOK modulation based on sequence B1.

The UE detects the LP-SS and obtains, by decoding, that the sequence carried on the LP-SS is sequence B1, and then the UE enables the host/the main receiving module to receive system information.

In an embodiment, it is assumed that determining the second sequence according to the target information by the base station includes the following: When the base station sends the system information change indication, the corresponding second sequence is sequence B1; when the base station sends the wake-up monitoring stop indication/the wake-up monitoring deactivation indication/the indication signal monitoring deactivation indication, the corresponding second sequence is sequence B2; when the base station sends the ETWS/the CMAS, the corresponding second sequence is sequence B3; when the base station sends the full wake-up signal, the corresponding second sequence is sequence B4; and when the base station is not required to send the target information, the corresponding second sequence is sequence B. It is assumed that the first signal is an LP-SS, with a corresponding transmission period T and an offset of 0.

When the base station is required to send the ETWS/the CMAS, the base station determines that the second sequence is sequence B1.

When the base station sends the LP-SS, the corresponding waveform is OOK modulation based on sequence B1.

The UE detects the LP-SS and obtains, by decoding, that the sequence carried on the LP-SS is sequence B1, and then the UE enables the host/the main receiving module to receive related system information.

In an embodiment, it is assumed that determining the second sequence according to the target information by the base station includes the following: When the base station sends the system information change indication/the ETWS/the CMAS, the corresponding second sequence is sequence B1; when the base station sends the wake-up monitoring stop indication/the wake-up monitoring deactivation indication/the indication signal monitoring deactivation indication, the corresponding second sequence is sequence B2; when the base station sends the full wake-up signal, the corresponding second sequence is sequence B3; and when the base station is not required to send the target information, the corresponding second sequence is sequence B. It is assumed that the first signal is an LP-SS, with a corresponding transmission period T and an offset of 0.

When the base station is required to send the ETWS/the CMAS, the base station determines that the second sequence is sequence B1.

When the base station sends the LP-SS, the corresponding waveform is OOK modulation based on sequence B1.

The UE detects the LP-SS and obtains, by decoding, that the sequence carried on the LP-SS is sequence B1, and then the UE enables the host/the main receiving module to receive related system information.

In an embodiment, when sequence B/B1/B2/B3/B4 includes a PN sequence, an initial value of the PN sequence is determined according to at least one of the cell identity (ID), the time-domain position at which the LP-SS is sent, or the frequency-domain position at which the LP-SS is sent. The length of the PN sequence is configured via signaling or fixed.

In an embodiment, when sequence B/B1/B2/B3/B4 includes a PN sequence/an orthogonal sequence/a preset sequence, a set is predefined. Sequence B/B1/B2/B3/B4 is a sequence selected from the sequence set according to at least one of the cell ID, the time-domain position at which the LP-SS is sent, or the frequency-domain position at which the LP-SS is sent.

### Embodiment four

The base station determines a second sequence and a first sequence according to target information.

The base station sends a first signal, during which the corresponding waveform is OOK modulation based on the second sequence. The first sequence is carried on the OOK symbol.

In an embodiment, determining the second sequence and the first sequence according to the target information by the base station includes the following: When the base station sends the full wake-up signal, the corresponding second sequence is sequence B1; when the base station sends the system information change indication/the wake-up monitoring stop indication/the ETWS/the CMAS/the wake-up monitoring deactivation indication/the indication signal monitoring deactivation indication, the corresponding first sequence is sequence A1; when the base station does not send the full wake-up signal, the corresponding second sequence is sequence B, and when the base station does not send the system information change indication/the wake-up monitoring stop indication/the ETWS/the CMAS, the corresponding second sequence is sequence A. It is assumed that the first signal is an LP-SS, with a corresponding transmission period T and an offset of 0.

When the base station is required to send the full wake-up signal and the system information change indication, the base station determines that the second sequence is sequence B1 and the first sequence is sequence A1. The base station sends the LP-SS. The waveform corresponding to the first signal is OOK modulation based on sequence B1. Sequence A1 is carried on the OOK symbol.

The UE detects the LP-SS, the sequence carried on the LP-SS is sequence B1, and sequence A1 is carried on the OOK symbol, and then the UE enables the host/the main receiving module to receive data.

In an embodiment, determining the second sequence and the first sequence according to the target information by the base station includes the following: When the base station sends the full wake-up signal, the corresponding second sequence is sequence B1; when the base station sends the system information change indication, the corresponding first sequence is sequence A1; when the base station sends the wake-up monitoring stop indication/the wake-up monitoring deactivation indication/the indication signal monitoring deactivation indication, the corresponding first sequence is sequence A2; when the base station sends the ETWS/the CMAS, the corresponding first sequence is sequence A3; when the base station does not send the full wake-up signal, the corresponding second sequence is sequence B; and when the base station does not send the system information change indication/the wake-up monitoring stop indication/the ETWS/the CMAS, the corresponding second sequence is sequence A. It is assumed that the first signal is an LP-SS, with a corresponding transmission period T and an offset of 0.

The base station is only required to send the wake-up monitoring stop indication and determine that the second sequence is sequence B and that the first sequence as sequence A2.

When the base station sends the LP-SS, the corresponding waveform is OOK modulation based on sequence B, where sequence A2 is carried on the OOK symbol.

The UE detects the LP-SS, the sequence carried on the LP-SS is sequence B, and sequence A2 is carried on the OOK symbol, and then the UE stops the wake-up monitoring and enables the host/the main receiving module to receive data.

### Embodiment five

The base station determines first data according to target information.

The base station sends first data, during which the corresponding waveform is OOK modulation based on the first data.

A time-domain position at which the first data is sent by the base station is determined according to at least one of the following: at least one of a signaling-configured period or a signaling-configured offset; a first offset; a start position of a discontinuous reception (DRX) cycle; or a start position of an extended idle mode discontinuous reception (eDRX) cycle.

A frequency-domain position at which the first data is sent by the base station is determined according to at least one of the following: a frequency-domain position of a first signal, a frequency-domain position of a wake-up signal, a second offset, or a frequency-domain position of a physical downlink control channel (PDCCH).

In an embodiment, determining the first data according to the target information by the base station includes the following: When the base station sends a full wake-up signal/a system information change indication/a wake-up monitoring stop indication/an ETWS/a CMAS/a wake-up monitoring deactivation indication/an indication signal monitoring deactivation indication, the corresponding first data is 1; and when the base station does not send the full wake-up signal, the corresponding first data is 0. A time-domain position of the first data is configured, via signaling, with a period of T1 and an offset of 0. A frequency-domain start position of second data is configured, via signaling, as a frequency-domain start position of the first signal. A Manchester coding rate is assumed to be 1/2.

When the base station is required to send the full wake-up signal, the base station determines that the first data is 1.

The base station sends the preprocessed first data, during which the corresponding waveform is OOK modulation based on the first data. Since the preprocessing includes Manchester coding, "10" is sent.

The UE detects the OOK signal and after preprocessing, obtains "1", and then the UE enables the host/the main receiving module to receive data.

The preprocessing includes at least Manchester coding.

In an embodiment, determining the first data according to the target information by the base station includes the following: When the base station sends the full wake-up signal, the first bit of the corresponding first data is 1; when the base station sends the system information change indication/the wake-up monitoring stop indication/the ETWS/the CMAS/the wake-up monitoring deactivation indication/the indication signal monitoring deactivation indication, the second bit of the corresponding first data is 1; and when the base station sends nothing, the corresponding first data is 00. The time-domain position of the first data is configured, via signaling, with a period of T1 and an offset of 0. The frequency-domain start position of the second data is configured, via signaling, as the frequency-domain start position of the first signal.

When the base station is required to send the system information change indication, the base station determines that the first data is 01.

The base station sends the preprocessed first data, during which the corresponding waveform is OOK modulation based on the first data. Since the preprocessing includes Manchester coding with a coding rate of 1/2 and an 8-bit CRC check, 0110 plus 8-bit CRC check bits are sent.

The UE detects the OOK signal and after preprocessing, obtains "01", and then the UE enables the host/the main receiving module to receive system information, where the preprocessing includes at least Manchester decoding and CRC checking.

In an embodiment, determining the first data according to the target information by the base station includes the following: When the base station sends the full wake-up signal, the first bit of the corresponding first data is 1; when the base station sends the system information change indication, the second bit of the corresponding first data is 1; when the base station sends the wake-up monitoring stop indication/the wake-up monitoring deactivation indication/the indication signal monitoring deactivation indication, the third bit of the corresponding first data is 1; when the base station sends the ETWS/the CMAS, the fourth bit of the corresponding first data is 1; and when the base station sends nothing, the corresponding first data is 0000. The time-domain position of the first data is configured, via signaling, with a period of T1 and an offset of 0. The frequency-domain start position of the second data is configured, via signaling, as the frequency-domain start position of the first signal.

When the base station is required to send the system information change indication, the base station determines that the first data is 0100.

The base station sends the preprocessed first data, during which the corresponding waveform is OOK modulation based on the first data. Since the preprocessing includes Manchester coding with a coding rate of 1/2, 01100101 is sent.

The UE detects the OOK signal and after preprocessing, obtains 0100, and then the UE enables the host/the main receiving module to receive data, where the preprocessing includes at least Manchester decoding.

In an embodiment, determining the first data according to the target information by the base station includes the following: When the base station sends the full wake-up signal/the system information change indication/the wake-up monitoring stop indication/the ETWS/the CMAS/the wake-up monitoring deactivation indication/the indication signal monitoring deactivation indication, the corresponding first data is M bits each being 0. The time-domain position of the first data is configured, via signaling, with a period of T1 and an offset of 0. The frequency-domain start position of the second data is configured, via signaling, as the frequency-domain start position of the first signal.

When the base station is required to send the system information change indication, the base station determines that the first data is M bits each being 0.

The base station sends the preprocessed first data, during which the corresponding waveform is OOK modulation based on the first data. Since the preprocessing includes 1/2-rate Manchester coding and M is configured, via signaling, as 4, 01010101 is sent.

The UE detects the OOK signal and after preprocessing, obtains four bits each being 0, and then the UE enables the host/the main receiving module to receive and send data, where the preprocessing includes at least Manchester decoding.

### Embodiment six

The base station determines first data and a first sequence according to target information.

The base station sends the first data, during which the corresponding waveform is OOK modulation based on the first data. The first sequence is carried on the OOK symbol.

In an embodiment, determining the first data and the first sequence according to the target information by the base station includes the following: When the base station sends a full wake-up signal, the corresponding first data is 1; when the base station does not send the full wake-up signal, the corresponding first data is 0; when the base station sends a system information change indication/a wake-up monitoring stop indication/an ETWS/a CMAS/a wake-up monitoring deactivation indication/an indication signal monitoring deactivation indication, the corresponding first sequence is sequence A1; and when the base station does not send the system information change indication/the wake-up monitoring stop indication/the ETWS/the CMAS/the wake-up monitoring deactivation indication/the indication signal monitoring deactivation indication, the corresponding first sequence is sequence A.

When the base station is required to send the full wake-up signal and the system information change indication, the base station determines that the first data is 1 and that the first sequence is sequence A1.

The base station sends the preprocessed first data, during which the corresponding waveform is OOK modulation based on the first data, and sequence A1 is carried on the OOK symbol.

FIG. 5 is a diagram illustrating that first data is sent according to an embodiment. As shown in FIG. 5, since the preprocessing includes 1/2-rate Manchester coding, 10 is sent, and sequence A1 is carried on the " 1" symbol.

The UE detects the OOK signal and after preprocessing, obtains 1 and sequence A1, and then the UE enables the host/the main receiving module to receive data, where the preprocessing includes at least Manchester decoding.

In an embodiment, determining the first data and the first sequence according to the target information by the base station includes the following: When the base station sends the full wake-up signal, the first bit of the corresponding first data is 1; when the base station sends the system information change indication, the corresponding first sequence is sequence A1; when the base station sends the wake-up monitoring stop indication/the wake-up monitoring deactivation indication/the indication signal monitoring deactivation indication, the corresponding first sequence is sequence A2; when the base station sends the ETWS/the CMAS, the corresponding first sequence is sequence A3; when the base station does not send the full wake-up signal, the corresponding first data is 0; and when the base station does not send the system information change indication/the wake-up monitoring stop indication/the ETWS/the CMAS/the wake-up monitoring deactivation indication/the indication signal monitoring deactivation indication, the corresponding first sequence is sequence A.

When the base station is required to send the full wake-up signal and the system information change indication, the base station determines that the first data is 1 and that the first sequence is sequence A1.

The base station sends the preprocessed first data, during which the corresponding waveform is OOK modulation based on the first data, and sequence A1 is carried on the OOK symbol. Since the preprocessing includes 1/2-rate Manchester coding, 10 is sent, and sequence A1 is carried on the "1" symbol.

The UE detects the OOK signal and after preprocessing, obtains 1 and sequence A1, and then the UE enables the host/the main receiving module to receive data, where the preprocessing includes at least Manchester decoding.

### Embodiment seven

The base station determines first data according to target information.

The base station sends a first signal and then sends the first data, where the waveform corresponding to the first signal is OOK modulation based on a second sequence, and the waveform corresponding to the first data is OOK modulation based on the first data.

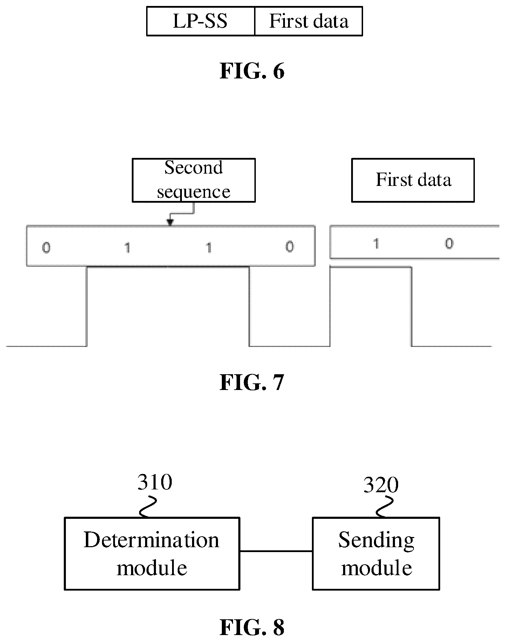

FIG. 6 is a diagram illustrating that first data is sent after a first signal according to an embodiment. As shown in FIG. 6, the first signal is an LP-SS.

In an embodiment, determining the first data according to the target information by the base station includes the following: When the base station sends a full wake-up signal/a system information change indication/a wake-up monitoring stop indication/an ETWS/a CMAS/a wake-up monitoring deactivation indication/an indication signal monitoring deactivation indication, the corresponding first data is 1; and when the base station does not send the full wake-up signal/the system information change indication/the wake-up monitoring stop indication/the ETWS/the CMAS/the wake-up monitoring deactivation indication/the indication signal monitoring deactivation indication, the corresponding first data is 0. It is assumed that the first signal is an LP-SS, with a corresponding transmission period T and an offset of 0.

When the base station is required to send the system information change indication, the base station determines that the first data is 1.

The base station first sends the LP-SS and then sends the preprocessed first data 1.

FIG. 7 is a diagram illustrating that first data is sent after a first signal according to an embodiment. As shown in FIG. 7, the waveform corresponding to the LP-SS is OOK modulation based on the second sequence. The sequence is [0110]. The preprocessing includes at least Manchester coding. It is assumed that the Manchester coding rate is 1/2.

The UE detects the LP-SS and obtains, by decoding, that the first data after the LP-SS is 1, and then the UE enables the host/the main receiving module to receive system information.

In an embodiment, determining the first data according to the target information by the base station includes the following: When the base station sends the full wake-up signal/the system information change indication/the wake-up monitoring stop indication/the ETWS/the CMAS/the wake-up monitoring deactivation indication/the indication signal monitoring deactivation indication, the corresponding first data is 1. It is assumed that the first signal is an LP-SS, with a corresponding transmission period T and an offset of 0.

When the base station is not required to send the full wake-up signal/the system information change indication/the wake-up monitoring stop indication/the ETWS/the CMAS/the wake-up monitoring deactivation indication/the indication signal monitoring deactivation indication, the base station sends only the LP-SS, where the waveform corresponding to the LP-SS is OOK modulation based on the second sequence, and the sequence is [0110].

The UE detects the LP-SS, and no first data is obtained by decoding after the LP-SS, and thus the UE does not enable the host/the main receiving module to receive system information.

In an embodiment, the indication signal includes a first signal, and the first signal is a low-power synchronization signal.

Embodiments of the present application also provide a signal sending apparatus. FIG. 8 is a diagram illustrating the structure of a signal sending apparatus according to an embodiment. As shown in FIG. 8, the signal sending apparatus includes a determination module 310 and a sending module 320.

The determination module 310 is configured to determine at least one of a target sequence or target data according to target information.

The sending module 320 is configured to send an indication signal, where the indication signal is generated according to the at least one of the target sequence or the target data.

In this embodiment, the signal sending apparatus can determine a corresponding target sequence and/or target data according to the target information, and the indication signal carries the target information through the target sequence and/or the target data. Based on this, the target information is sent.

In an embodiment, the target information includes at least one of the following: a full wake-up signal, a system information change indication, a wake-up monitoring stop indication, public warning system information, a wake-up monitoring deactivation indication, or an indication signal monitoring deactivation indication.

In an embodiment, the target sequence includes at least one of the following: a Zadoff-Chu (ZC) sequence, a pseudo-noise (PN) sequence, or an orthogonal sequence.

In an embodiment, the target sequence includes at least one subsequence from at least one configured subsequence, or the target sequence is obtained from first coding on at least one configured subsequence.

The at least one configured subsequence includes at least one of a PN sequence, a preset sequence, or an orthogonal sequence.

The first coding includes at least one of the following: Manchester coding, bi-phase space coding, polar coding, Reed-Muller coding, turbo coding, or tail biting convolutional coding.

In an embodiment, the target sequence includes a first sequence, the indication signal includes a first signal, and the first sequence is carried on a modulation symbol corresponding to the first signal.

In an embodiment, the target sequence includes a first sequence, the indication signal includes a wake-up signal, and the first sequence is carried on a preamble included in the wake-up signal.

In an embodiment, the target sequence includes a second sequence, the indication signal includes a first signal, and the waveform corresponding to the first signal is a first modulated waveform based on the second sequence.

In an embodiment, the signal sending apparatus also includes a root index determination module, an initial value determination module, and a sequence determination module.

The root index determination module is configured to, in response to the first sequence including a ZC sequence, determine a root index of the ZC sequence according to at least one of a cell identifier, a time-domain position at which the first signal is sent, a frequency-domain position at which the first signal is sent, or the target information.

The initial value determination module is configured to, in response to the first sequence or a second sequence including a PN sequence, determine an initial value of the PN sequence according to at least one of the cell identifier, the time-domain position at which the first signal is sent, the frequency-domain position at which the first signal is sent, or the target information.

The sequence determination module is configured to, in response to the first sequence or the second sequence including the PN sequence, an orthogonal sequence, or a preset sequence, select the PN sequence, the orthogonal sequence, or the preset sequence from a predefined PN sequence set, a predefined orthogonal sequence set, or a preset sequence set according to at least one of the cell identifier, the time-domain position at which the first signal is sent, the frequency-domain position at which the first signal is sent, or the target information.

In an embodiment, the target sequence includes a first sequence and a second sequence, the indication signal includes a first signal, the waveform corresponding to the first signal is a first modulated waveform based on the second sequence, and the first sequence is carried on a modulation symbol corresponding to the first signal.

In an embodiment, the target data includes first data, the indication signal includes the first data, and the waveform corresponding to the first data is a first modulated waveform based on the first data.

A time-domain position at which the first signal is sent is determined according to at least one of the following: at least one of a signaling-configured period or a signaling-configured offset; a first offset; a start position of a discontinuous reception (DRX) cycle; or a start position of an extended idle mode discontinuous reception (eDRX) cycle.

A frequency-domain position at which the first signal is sent is determined according to at least one of the following: a frequency-domain position of a target signal, a frequency-domain position of a wake-up signal, a second offset, or a frequency-domain position of a physical downlink control channel.

In an embodiment, the target sequence includes a first sequence, the target data includes first data, the indication signal includes the first data, the waveform corresponding to the first data is a first modulated waveform based on the first data, and the first sequence is carried on a modulation symbol corresponding to the first data.

In an embodiment, the target data includes first data, the indication signal includes a first signal, the first data is sent after the first signal, and the waveform corresponding to the first data is a first modulated waveform based on the first data.

In an embodiment, the indication signal includes a first signal, and the first signal is a low-power synchronization signal.

The signal sending apparatus of this embodiment is based on the same inventive concept as the signal sending method of any previous embodiment. For technical details not described in this embodiment, see any previous embodiment. This embodiment has the same beneficial effect as the performed signal sending method.

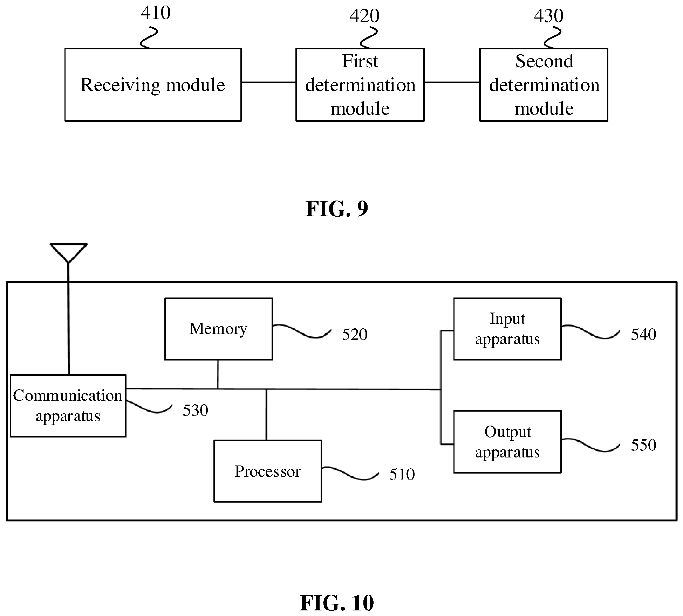

Embodiments of the present application also provide an information determination apparatus. FIG. 9 is a diagram illustrating the structure of a signal sending apparatus according to an embodiment. As shown in FIG. 9, the information determination apparatus includes a receiving module 410, a first determination module 420, and a second determination module 430.

The receiving module 410 is configured to receive an indication signal.

The first determination module 420 is configured to determine at least one of a target sequence or target data according to the indication signal.

The second determination module 430 is configured to determine target information according to the at least one of the target sequence or the target data.

The indication signal received by the signal sending apparatus of this embodiment carries the target information through the target sequence and/or the target data. The second communication node can determine the target information according to the indication signal to determine whether to be woken up or whether to start data transmission.

In an embodiment, the target information includes at least one of the following: a full wake-up signal, a system information change indication, a wake-up monitoring stop indication, public warning system information, a wake-up monitoring deactivation indication, or a target signal monitoring deactivation indication.

In an embodiment, the indication signal includes a first signal, and the target sequence includes a first sequence.

The second determination module 430 is configured to determine the target information according to the first sequence carried on a modulation symbol corresponding to the first signal.

In an embodiment, the indication signal includes a first signal, the waveform corresponding to the first signal is a first modulated waveform based on a second sequence, and the target sequence includes a first sequence and the second sequence.

The second determination module 430 is configured to determine the target information according to the first sequence carried on a modulation symbol corresponding to the first signal and the second sequence corresponding to the first signal.

In an embodiment, the indication signal includes a wake-up signal, and the target sequence includes a first sequence.

The second determination module 430 is configured to determine the target information according to the first sequence carried on a preamble included in the wake-up signal.

In an embodiment, the indication signal includes a first signal, the waveform corresponding to the first signal is a first modulated waveform based on a second sequence, and the target sequence includes the second sequence.

The second determination module 430 is configured to determine the target information according to the second sequence corresponding to the first signal.

In an embodiment, the indication signal includes first data, and the target data includes the first data.

The second determination module 430 is configured to determine the target information according to the first data.

In an embodiment, the indication signal includes a first signal, first data is sent after the first signal, and the target data includes the first data.

The second determination module 430 is configured to determine the target information according to the first data sent after the first signal.

In an embodiment, the indication signal includes first data, the waveform corresponding to the first data is a first modulated waveform based on the first data, a first sequence is carried on a modulation symbol corresponding to the first data, the target data includes the first data, and the target sequence includes the first sequence.

The second determination module 430 is configured to determine the target information according to the first data and the first sequence carried on the modulation symbol corresponding to the first data.

In an embodiment, the indication signal includes a first signal, and the first signal is a low-power synchronization signal.

The information determination apparatus of this embodiment and the information determination method of any previous embodiment belong to the same inventive concept. For technical details not described in detail in this embodiment, see any previous embodiment. This embodiment has the same beneficial effects as the information determination method performed.

Embodiments of the present application further provide a communication node. FIG. 10 is a diagram illustrating a hardware structure of a communication node according to an embodiment. As shown in FIG. 10, the communication node provided by the present application includes a processor 510 and a memory 520. One or more processors 510 may be provided in the communication node. In FIG. 10, one processor 510 is used as an example. The memory 520 is configured to store one or more programs. The one or more programs are executed by the one or more processors 510 to cause the one or more processors 510 to perform the signal sending method or the information determination method provided in embodiments of the present application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners, and the connection via a bus is shown as an example in FIG. 10.

The input apparatus 540 may be configured to receive inputted digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules such as program instructions/modules corresponding to the signal sending method of any embodiment of the present application (for example, the determination module 310 and the sending module 320 in the signal sending apparatus). The memory 520 may include a program storage region and a data storage region, where the program storage region may store an operating system and an application program required by at least one function, and the data storage region may store data and the like created according to the use of the communication node. Additionally, the memory 520 may include a high-speed random-access memory and may also include a nonvolatile memory such as at least one disk memory, a flash memory, or another nonvolatile solid-state memory. In some examples, the memory 520 may also include memories remote relative to the processor 510 and accessible to the communication node via a network. Examples of the network include, but are not limited to, the Internet, an intranet, a local area network, a mobile communication network, and a combination thereof.

Embodiments of the present application also provide a storage medium. The storage medium stores a computer program which, when executed by a processor, causes the processor to perform the signal sending method of any embodiment of the present application. The signal sending method includes determining at least one of a target sequence or target data according to target information; and sending an indication signal, where the indication signal is generated according to the at least one of the target sequence or the target data. Alternatively, the storage medium stores a computer program which, when executed by a processor, causes the processor to perform the information determination method of any embodiment of the present application. The information determination method includes receiving an indication signal; determining at least one of a target sequence or target data according to the indication signal; and determining target information according to the at least one of the target sequence or the target data.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Concrete examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disk read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A signal sending method, applied to a first communication node, comprising:
determining at least one of a target sequence or target data according to target information; and
sending an indication signal, wherein the indication signal is generated according to the at least one of the target sequence or the target data.

2. The method of claim 1, wherein the target information comprises at least one of the following: a full wake-up signal, a system information change indication, a wake-up monitoring stop indication, public warning system information, a wake-up monitoring deactivation indication, or an indication signal monitoring deactivation indication.

3. The method of claim 1, wherein the target sequence comprises at least one of the following: a Zadoff-Chu (ZC) sequence, a pseudo-noise (PN) sequence, or an orthogonal sequence.

4. The method of claim 1, wherein the target sequence comprises at least one subsequence from at least one configured subsequence, or the target sequence is obtained from first coding on at least one configured subsequence, wherein
the at least one configured subsequence comprises at least one of a PN sequence, a preset sequence, or an orthogonal sequence; and
the first coding comprises at least one of the following: Manchester coding, bi-phase space coding, polar coding, Reed-Muller coding, turbo coding, or tail biting convolutional coding.

5. The method of claim 1, wherein the target sequence comprises a first sequence, the indication signal comprises a first signal, and the first sequence is carried on a modulation symbol corresponding to the first signal.

6. The method of claim 1, wherein the target sequence comprises a first sequence, the indication signal comprises a wake-up signal, and the first sequence is carried on a preamble comprised in the wake-up signal.

7. The method of claim 1, wherein the target sequence comprises a second sequence, the indication signal comprises a first signal, and a waveform corresponding to the first signal is a first modulated waveform based on the second sequence.

8. The method of claim 1, wherein the target sequence comprises a first sequence and a second sequence, the indication signal comprises a first signal, a waveform corresponding to the first signal is a first modulated waveform based on the second sequence, and the first sequence is carried on a modulation symbol corresponding to the first signal.

9. The method of claim 1, wherein the target sequence comprises a first sequence, the target data comprises first data, the indication signal comprises the first data, a waveform corresponding to the first data is a first modulated waveform based on the first data, and the first sequence is carried on a modulation symbol corresponding to the first data.

10. The method of any one of claims 5 to 9, further comprising:
in response to the first sequence comprising a ZC sequence, determining a root index of the ZC sequence according to at least one of a cell identifier, a time-domain position at which the first signal is sent, a frequency-domain position at which the first signal is sent, or the target information;
in response to the first sequence or a second sequence comprising a PN sequence, determining an initial value of the PN sequence according to at least one of the cell identifier, the time-domain position at which the first signal is sent, the frequency-domain position at which the first signal is sent, or the target information; and
in response to the first sequence or the second sequence comprising the PN sequence, an orthogonal sequence, or a preset sequence, selecting the PN sequence, the orthogonal sequence, or the preset sequence from a predefined PN sequence set, a predefined orthogonal sequence set, or a preset sequence set according to at least one of the cell identifier, the time-domain position at which the first signal is sent, the frequency-domain position at which the first signal is sent, or the target information.

11. The method of claim 1, wherein the target data comprises first data, the indication signal comprises the first data, and a waveform corresponding to the first data is a first modulated waveform based on the first data.

12. The method of claim 11, wherein a time-domain position at which the first signal is sent is determined according to at least one of the following: at least one of a signaling-configured period or a signaling-configured offset; a first offset; a start position of a discontinuous reception (DRX) cycle; or a start position of an extended idle mode discontinuous reception (eDRX) cycle; and
a frequency-domain position at which the first signal is sent is determined according to at least one of the following: a frequency-domain position of a target signal, a frequency-domain position of a wake-up signal, a second offset, or a frequency-domain position of a physical downlink control channel.

13. The method of claim 1, wherein the target data comprises first data, the indication signal comprises a first signal, the first data is sent after the first signal, and a waveform corresponding to the first data is a first modulated waveform based on the first data.

14. The method of claim 1, wherein the indication signal comprises a first signal, and the first signal is a low-power synchronization signal.

15. An information determination method, applied to a second communication node, comprising:
receiving an indication signal;
determining at least one of a target sequence or target data according to the indication signal; and
determining target information according to the at least one of the target sequence or the target data.

16. The method of claim 15, wherein the target information comprises at least one of the following: a full wake-up signal, a system information change indication, a wake-up monitoring stop indication, public warning system information, a wake-up monitoring deactivation indication, or a target signal monitoring deactivation indication.

17. The method of claim 15, wherein
the indication signal comprises a first signal, and the target sequence comprises a first sequence; and
determining the target information according to the at least one of the target sequence or the target data comprises:
determining the target information according to the first sequence carried on a modulation symbol corresponding to the first signal.

18. The method of claim 15, wherein
the indication signal comprises a first signal, a waveform corresponding to the first signal is a first modulated waveform based on a second sequence, and the target sequence comprises a first sequence and the second sequence; and
determining the target information according to the at least one of the target sequence or the target data comprises:
determining the target information according to the first sequence carried on a modulation symbol corresponding to the first signal and the second sequence corresponding to the first signal.

19. The method of claim 15, wherein
the indication signal comprises a wake-up signal, and the target sequence comprises a first sequence; and
determining the target information according to the at least one of the target sequence or the target data comprises:
determining the target information according to the first sequence carried on a preamble comprised in the wake-up signal.

20. The method of claim 15, wherein
the indication signal comprises a first signal, a waveform corresponding to the first signal is a first modulated waveform based on a second sequence, and the target sequence comprises the second sequence; and
determining the target information according to the at least one of the target sequence or the target data comprises:
determining the target information according to the second sequence corresponding to the first signal.

21. The method of claim 15, wherein
the indication signal comprises first data, and the target data comprises the first data; and
determining the target information according to the at least one of the target sequence or the target data comprises:
determining the target information according to the first data.

22. The method of claim 15, wherein
the indication signal comprises a first signal, first data is sent after the first signal, and the target data comprises the first data; and
determining the target information according to the at least one of the target sequence or the target data comprises:
determining the target information according to the first data sent after the first signal.

23. The method of claim 15, wherein
the indication signal comprises first data, a waveform corresponding to the first data is a first modulated waveform based on the first data, a first sequence is carried on a modulation symbol corresponding to the first data, the target data comprises the first data, and the target sequence comprises the first sequence; and
determining the target information according to the at least one of the target sequence or the target data comprises:
determining the target information according to the first data and the first sequence carried on the modulation symbol corresponding to the first data.

24. A communication node, comprising a memory and at least one processor, wherein
the memory is configured to store at least one program; and
when executed by the at least one processor, the at least one program causes the at least one processor to perform the signal sending method of any one of claims 1 to 14 or the information determination method of any one of claims 15 to 23.

25. A computer-readable storage medium storing a computer program which, when executed by a processor, causes the processor to perform the signal sending method of any one of claims 1 to 14 or the information determination method of any one of claims 15 to 23.
